# EUROPEAN PATENT SPECIFICATION

(11) **EP 1 033 872 B1**
(45) Date of publication and mention of the grant of the patent: **07.01.2009**
(21) Application number: 00301525.2
(22) Date of filing: 25.02.2000
(51) Int. Cl.: H04N 5/44

(54) **Receiving apparatus and receiving method**
Empfangsgerät und- Verfahren
Appareil récepteur et méthode de réception

(30) Priority: 03.03.1999 JP 5507899
(43) Date of publication of application: 06.09.2000
(73) Proprietor: Hitachi, Ltd., Chiyoda-ku, Tokyo 101 (JP)
(72) Inventor: Akiyama, Hitoshi, Minami-ku, Yokohama-shi, Kanagawa (JP); Shirosugi, Takatoshi, Towa City Homes Chigasaki,, Chigasaki-shi, Kanagawa (JP); Noda, Tsutomu, Totsuka-ku, Yokohama-shi, Kanagawa (JP)
(74) Representative: Calderbank, Thomas Roger

(56) References cited:
- WO-A-96/19056
- US-A- 5 877 817

## Description

This invention relates to an apparatus and a method of receiving a physical channel of a digital modulation signal from a transmission signal comprising a plurality of physical channels that include physical channels formed by video, audio, and data. In particular, it relates to the apparatus and the method of searching and storing a receivable physical channel. The physical channel means a unit of a predetermined frequency band width

In usual receiving apparatus for a television broadcast, the apparatus when used for the first time searches receivable physical channels, stores the receivable physical channels as a result of the search by the receiving apparatus, and performs selection of channels based upon the stored information. The initial setting search is performed not only the first time the apparatus is used, but also in case that a receivable physical channel changes due to a movement of the receiving apparatus, as it is then necessary to update the stored physical channel information in the apparatus.

Searching and storing of the receivable physical channels is usually performed by changing frequency and searching from the lowest or the highest physical channel in order by each physical channel frequency and storing the physical channels after all receivable frequencies have been searched.

Searching and storing of the receivable physical channels also becomes necessary when a digital transmission system is used. As the digital transmission system, MPEG2 (MOTION PICTURE EXPERTS GROUP) is used as a compress and multiplex system of video, audio, and data, the digital data is a data line called multiplexed transport stream, and as a modulation system QPSK (QUADRATURE PHASE SHIFT KEYING), QAM (QUADRATURE AMPLITUDE MODULATION), and VSB (VESTIGIAL SIDE BANDS)is utilized in many directions.

Further there is an OFDM system (Orthogonal Frequency Division Multiplex) that multiple orthogonal multi carriers transmit simultaneously with the other modulation system. This system is standardized as a terrestrial digital television broadcasting system in Europe and has achieved practical use. For example a terrestrial digital television broadcasting system called "DVB-T" is proposed in Europe in European Telecommunication Standard Draft ETS 300 74.4, "Digital broadcasting systems for television, sound and data services; Framing structure, channel coding and modulation for digital terrestrial television".

In the DVB-T standard, various modulation parameters are provided. To give an actual example, two kinds of modes are provided that size the FFT (FAST FOURIER TRANSFORM) in accordance with a number of sub-carriers of 2k and 8k and four kinds of guard interval length, such as 1/4, 1/8, 1/16, and 1/32 are provided in accordance with symbol length. Further three kinds of modulation system of each subcarrier, such as QPSK, 16QAM, 64QAM are provided, and five kinds of code rate in punctured code, such as 1/2, 2/3, 3/4, 5/6, 7/8 are provided.

Further the physical channel frequency utilizing broadcast is provided with a center frequency of the digital modulation signal and a center frequency of the physical channel band width. The center frequency of the digital modulation signal is shifted to the center frequency of physical channel band width and transmitted. This is called frequency offset, and in the DVB-T standard digital modulation frequency can be shifted up or down by 167 kHz and transmitted.

In the case that a broadcast uses DVB-T, the broadcast selects a particular parameter, such as the FFT size, a value of guard-interval, the modulation system of each physical channel, the code rate, a value of frequency offset etc, from a large number of modulation parameters, and modulates. If the modulation parameter that is utilized by the broadcast is unknown, the receiving apparatus needs to ascertain whether each physical channel is receivable or not during the search by above-mentioned initial setting. To give an actual example, the receiving apparatus judges if each modulation parameter that is set as a value is receivable, and in the case that it isn't receivable, the modulation parameter is shifted one at a time, and the receiving apparatus judges again. In this manner, it is judged if the modulation parameter is receivable while shifting the modulation parameters one at a time. In the case that none of the combinations of the modulation parameters are receivable, the receiving apparatus confirms that the digital modulation signal isn't transmitted.

Therefore, if the number of modulation parameters increases, then the combination of the parameters which are necessary to judge if they are receivable, also increases

Since the number of modulation parameters utilized in transmission of an analog broadcast is small compared with digital modulation, generally the search time per physical channel in a digital broadcast is long compared with the search time per physical channel in an analog broadcast.

Furthermore, in the above-mentioned example of the prior art, the frequency of the physical channel searches from the lowest or the highest physical channel in order and as all of the physical channels require tuning it takes a long time to complete the search.

In addition it is necessary to store all the transmission parameters of the tuned physical channels in the search information store and so the initial setting takes a long time.

A purpose of this invention is to provide a receiving apparatus that reduces wasted time and stores the receivable physical channels at the initial setting.

According to the invention, there is provided receiving apparatus as set out in claim 1 and a receiving method as set out in claim 9. The apparatus of invention comprises the following means:
(1) Selection means for converting a physical channel frequency of a received digital modulation signal and selecting the physical channel frequency
(2)Demodulation means for demodulating the digital modulation signal in accordance with the above-mentioned modulation parameter
(3) Physical channel distribution information store means for storing physical channel distribution information of receiving area
(4) Receiving state judgement means for judging the receiving state of the received physical channel
(5)Multiplex separation means for separating a transport stream from the demodulation means into respective stream of video, audio and data
(6) Extraction means for extracting other physical channel information from the data stream
(7) Control means for controlling receiving frequency from a receiving state of the physical channel distribution information, physical channel information and receiving signal
(8) Store means for storing receivable physical channel information

By means of these means, the following searching and storing are performed.

The receiving apparatus starts searching from the physical channel which is very frequently used according to the physical channel distribution information stored in the physical channel distribution information store means. If the digital modulation signal isn't receivable in a plurality of the physical channels, the apparatus performs searching from a lowest or highest physical channel frequency in order, and if a receivable physical channel is found by either search, then the apparatus finishes the search.

By means of extracting other physical channel information being utilized in digital modulation signal transmission from the transport stream of the receivable physical channel found by the search and using channel frequencies and modulation parameters that are included in this other physical channel information, the apparatus searches physical channels, finally finds all receivable transport streams, and stores necessary physical channel information for receiving of these physical channels.
Fig. 1 is the figure is a block diagram showing a structure of the receiving apparatus relating to this invention.
Fig 2. is a flow chart showing a search motion of the receiving apparatus relating to this invention.
Fig. 3 is a flow chart showing a part of the search motion of the receiving apparatus relating to this invention.
Fig. 4 is a flow chart showing a search motion of the receiving apparatus relating to invention
Fig. 5 is a flow chart showing a part of the search motion of the receiving apparatus relating to this invention.
Fig. 6 is a flow chart showing a search motion carried out by the receiving apparatus relating to invention.

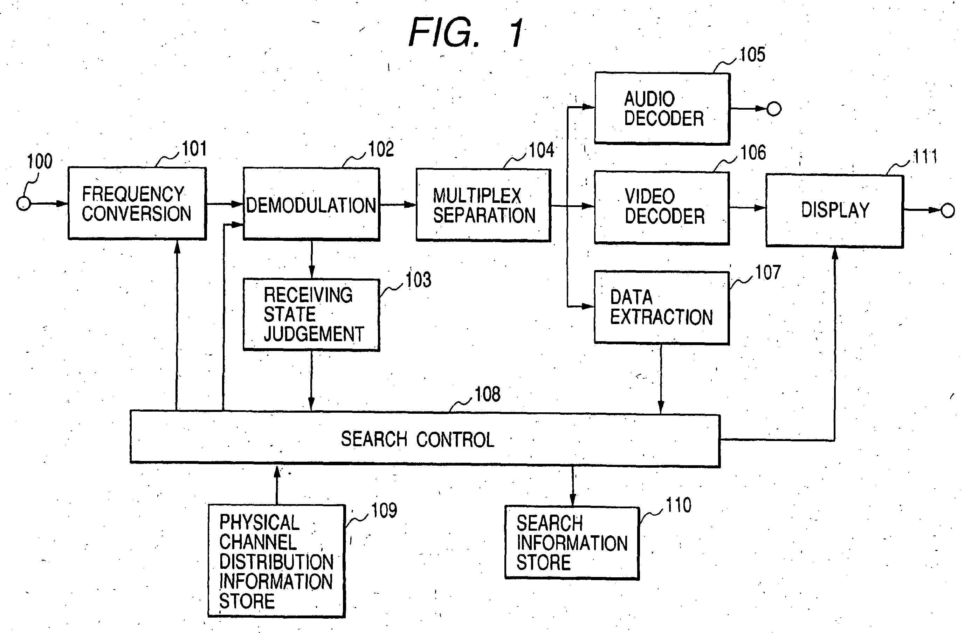

Hereafter, an embodiment of this invention will be explained referring to Fig. 1.

Fig. 1 is a block diagram representing a structure of a receiving apparatus relating to this invention. In Fig. 1, 100 is an input terminal to input a received digital modulation signal, 101 is a frequency conversion means for converting a physical channel frequency of the digital modulation signal and selecting the physical channel, 102 is a demodulation means for demodulating the digital modulation signal, 103 is a receiving state judgement means for judging a state of receiving of the physical channel, 104 is a multiplex separation means for separating a transport stream into respective streams of video, audio and data, 105 is an audio decoder for decoding the compressed audio stream, 106 is a video decoder for decoding the compressed video stream, 107 is a data extraction means for extracting other physical channel information from the data stream, 108 is a searching control means for controlling a receiving frequency of the frequency conversion, 109 is a physical channel distribution information store means for storing a physical channel distribution information, 110 is a searching information store means for storing a searched receivable physical channel information, 111 is a display means for externally displaying a decoded video or searched state.

Since in the initial condition the required information is not in the searching information store means 110, the receiving apparatus searches a receivable physical channel so as to set an initial setting of a receiving information, and stores the result of the searching in the searching information store means 110.

The receiving digital modulation signal received by the receiving apparatus is a transmitted signal from a transmitter, wherein the transmitted signal is a MPEG2 modulated transport stream, modulated at the transmitter by OFDM modulation and converted to the physical channel frequency that is assigned for a broadcast. This transmitter transmits a plurality of modulated transport streams using a plurality of physical channels. Hereafter, the receiving apparatus that receives a signal modulated by OFDM will be explained.

In the input terminal 100, the digital modulation signal transmitted from the transmitter is inputted. The frequency conversion means 101 selects so as to pass a digital modulation signal of a particular physical channel in accordance with control of the searching control means 108, OFDM demodulation is performed in the demodulation means 102 and outputs a MPEG transport stream. The receiving state judgement means 103 judges the state of receiving of the digital modulation signal and sends a control data to the searching control means. The multiplex separation means 104 separates the inputted transport stream into respective streams of video, audio and data, and they are inputted to respective audio decoder 105, video decoder 106, and data extraction means 107. The audio decoder 105 and video decoder 106 demodulate the compressed stream and output them as.an audio signal and a video signal, and displays the audio and video on the display means 111 based upon the outputted signal. Further the display means 111 is able to display an output of the searching state from the searching control means.

The data extraction means extracts a NIT (NETWORK INFORMATION TABLE) information from a received transport stream. In the NIT information, all physical channel information transmitted from the same SIP (SERVICE INSERTION POINTS) is included. The SIP is a unit on a broadcast transmitting system comprising a single or a plurality of transmitters. Each transmitter transmits a plurality of transport streams using different physical channels from the others, the video, audio, and data stream in the same transport stream in the same SIP are completely the same.

Different transmitters using different physical channels but located in the same SIP will all transmit the same NIT information.

The physical channel information in the NIT information includes at least all physical channel frequency information transmitting in the SIP, and may include modulation parameter information such as a state of frequency offset, FFT size, guard interval length, each sub-career modulation system, code rate on punchard encode. If it is a transmitting system in which SIPs exist other transmitters existing in the SIP also transmit physical channel information along with the transmission information.

Further, the concept is not limited to a transmitting system with SIPs. In the case of a system which comprises of collective independent transmitters, the different transport stream and NIT information is transmitted to each transmitter. In this case, the above-mentioned other physical channel information which the transmitter uses for the transmission is included in the NIT information transmitted to each transmitter.

If the modulation parameter is included in the other physical channel information, without using excessive modulation parameters, using only one combination of the parameter and search, the apparatus can prevent from increasing searching time because of the large number of the modulation parameters. Then, to put it concretely, controlling demodulation of the demodulation means 102 by the searching control means 108, the apparatus can perform rapid demodulation.

Further, if all modulation parameters are not included in the physical channel information, but at least the physical channel frequency is judged, then the apparatus can perform appointing the physical channel directly for the search of all physical channels transmitted from the same transmitter.

The searching control means 108 decides the physical channel frequency for searching with priority based upon the physical channel distribution information stored in the physical channel distribution information store means 109. If the searched physical channel is receivable, the apparatus stores its information on the receiving of the physical channel in the information store means 110, and the information is utilized after initial setting when the apparatus searches.

The following table 1 represents an example of the distribution of the physical channels utilized by transmitters in all areas, and TS1-TS6 in the table represent the kind of the transport stream transmitting.

**Table 1**

| Transmitter | Physical channel using the transmission | | | | | |
|---|---|---|---|---|---|---|
| | TS 1 | TS 2 | TS 3 | TS 4 | TS 5 | TS 6 |
| 1 | 22 | 24 | 28 | 29 | 31 | 34 |
| 2 | 41 | 44 | 47 | 49 | 51 | 54 |
| 3 | 21 | 25 | 27 | 31 | 32 | 69 |
| 4 | 39 | 42 | 45 | 55 | 58 | 61 |
| 5 | 43 | 48 | 50 | 58 | 60 | 68 |
| 6 | 25 | 27 | 39 | 42 | 45 | 59 |
| 7 | 55 | 57 | 58 | 60 | 61 | 68 |
| 8 | 25 | 28 | 29 | 31 | 44 | 52 |
| 9 | 49 | 55 | 56 | 59 | 62 | 65 |
| 10 | 47 | 49 | 55 | 58 | 61 | 68 |
| 11 | 31 | 40 | 43 | 46 | 47 | 49 |
| 12 | 56 | 59 | 60 | 62 | 64 | 65 |
| 13 | 28 | 31 | 34 | 46 | 51 | 54 |
| 14 | 21 | 27 | 29 | 31 | 60 | 63 |
| 15 | 31 | 38 | 43 | 48 | 66 | 68 |
| 16 | 43 | 46 | 53 | 58 | 60 | 63 |
| 17 | 39 | 47 | 49 | 50 | 58 | 68 |
| 18 | 31 | 40 | 42 | 45 | 46 | 67 |
| 19 | 49 | 52 | 55 | 59 | 62 | 65 |
| 20 | 22 | 25 | 29 | 31 | 32 | 34 |
| 21 | 39 | 41 | 44 | 47 | 49 | 51 |
| 22 | 22 | 25 | 29 | 31 | 32 | 34 |
| 23 | 52 | 54 | 56 | 58 | 61 | 64 |
| 24 | 53 | 54 | 57 | 58 | 61 | 64 |
| 25 | 21 | 24 | 27 | 31 | 33 | 46 |
| 26 | 52 | 56 | 58 | 63 | 66 | 67 |
| 27 | 39 | 42 | 43 | 45 | 49 | 50 |
| 28 | 25 | 34 | 56 | 59 | 67 | 69 |
| 29 | 21 | 22 | 25 | 28 | 31 | 32 |
| 30 | 48 | 51 | 53 | 57 | 60 | 62 |

The table 1 represents that there are thirty transmitters used by the transmission, transmitting six kinds of the transport stream from each transmitter using six physical channels, and it is possible for the receiving apparatus to receive a transmission signal from any transmitter in the table. The usage distribution of physical channels is variable and follows no particular pattern. However, the physical channels used for the transmission are from physical channel 21 to physical channel 69. Therefore, it is possible to find first receivable physical,channel with higher probability when the searching starts with priority from the physical channel which is very frequently used based upon the physical channel distribution information than by a method of searching which starts from the lowest or the highest physical channel.

The following table 2 represents that there is a case that the physical channel distribution is done like the table 1, wherein there are higher ranking five physical channels.

**Table 2**

| Physical Channel | Number of the transmitter | Usage rate (%) | Total number of Receivable transmitters | Area cover rate (%) |
|---|---|---|---|---|
| 31 | 12 | 40 | 12 | 40 |
| 58 | 9 | 30 | 21 | 70 |
| 49 | 8 | 27 | 26 | 87 |
| 25 | 7 | 23 | 28 | 93 |
| 60 | 6 | 20 | 30 | 100 |

The table contains the number of the transmitters using the physical channel, the usage rate (the percentage of transmitters using the physical channel) and the total number of Receivable transmitters using the physical channel of that row of the table or a physical channel which is more frequently used and the physical channels which are more frequently used. The final column of the table gives the probability of a transmission signal from any of the transmitters in the fourth column of the table being received by the receiving apparatus, this probability expressed as a percentage represents the area cover rate. If the receivable area receiving the transmitted signal from each transmitter is the same, then if for example in a randomly selected area the channel 31 is searched as the first physical channel that is very frequently used, since twelve transmitters of the thirty transmitters use the physical channel 31 for the transmission, there is a forty percent chance that in that area physical channel 31 is receivable.

The second physical channel 58 that is very frequently used is used by nine transmitters, and since there are no transmitters that use both physical channel 31 and physical channel 58, there is a total of twenty-one transmitters using either physical channel 31 or physical channel 58. Therefore, if searching is up to the second frequency that is very frequently used, there is a probability of the seventy percent that either physical channel 31 or physical channel 58 is receivable.

There are eight transmitters using the third physical channel 49 that is very frequently used, but three of these transmitters already use physical channel 31 or physical channel 58. Therefore there are twenty-six transmitters using the physical channel 31, physical channel 58, or physical channel 49 for the transmission. In the same way, the total number of the transmitters is twenty-eight using up to the fourth physical channel that is very frequently used, and the total number of the transmitters is thirty using up to the fifth physical channel that is very frequently used. Therefore, if the searching searches the five physical channels that are very frequently used, it is able to receive a physical channel with a probability of one hundred percent, and it can find the receivable physical channel efficiently.

The Physical channel distribution information store means of Fig. 1 provides a recording medium, and can perform reading and writing information against the recording medium. In the recording medium, it stores the physical channel distribution information of all transmitters corresponding to table 1 and information on physical channels that are very frequently used corresponding to table 2.

With respect to the recording of the physical channel distribution information, there is a method of pre-recording the distribution information in the recording medium and a method of extracting distribution information including the data stream of transmission signal by the data extraction means and writing to the recording medium.

Since the former case does not incorporate the recording medium inside of the recording means and is removable, it can be exchanged with a recording medium storing a new distribution information. The latter can write the new distribution information into a new recording medium or when a constitution of the physical channel which is used for the transmitter and the transmission changes, it renews the distribution information, and it is flexible and can correspond in the new transmission situation.

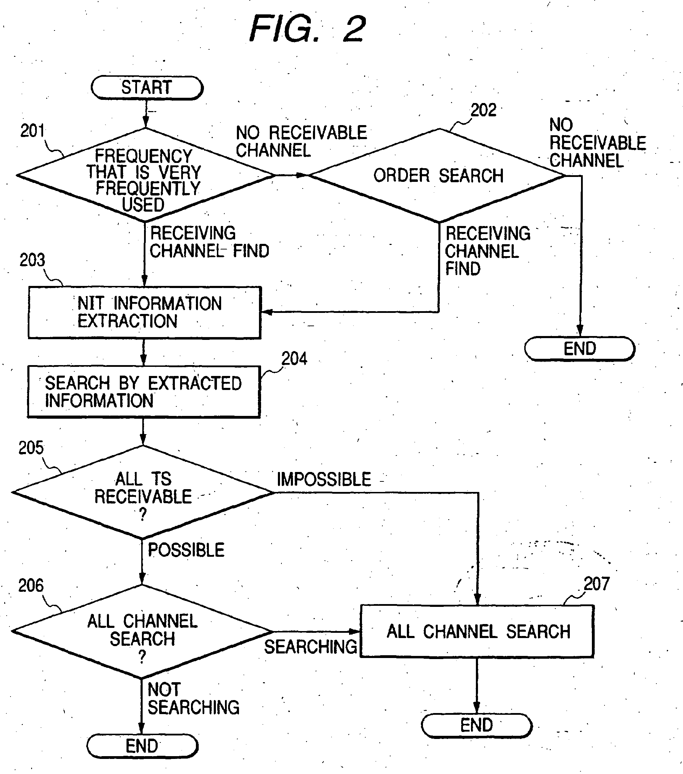

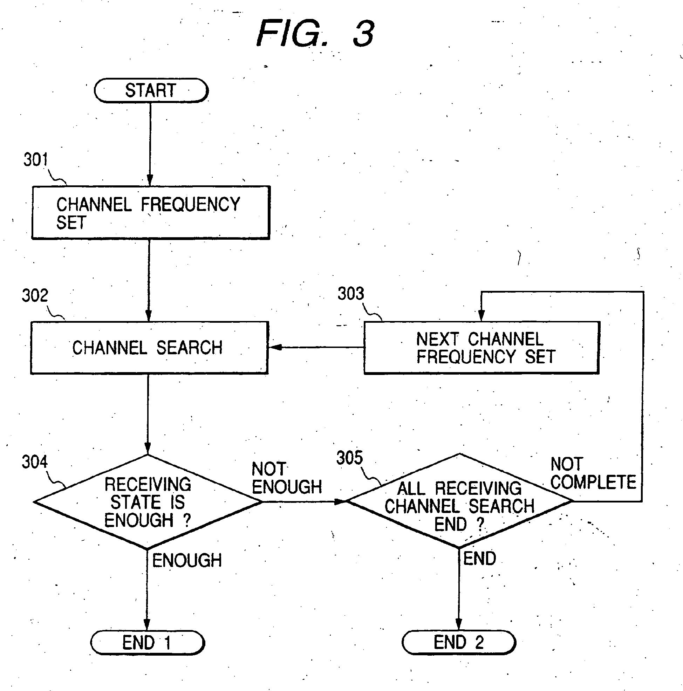

A mode of operation of the receiving apparatus of Fig. 1, in the case when it operates the initial setting of a receiving information, is now explained with reference to Fig. 2, 3, 4 and table 1. Fig. 2 is a flowchart showing the search movement on the initial setting of the receiving information of the receiving apparatus concerned with this invention, and Fig. 3 is a flowchart which describes a movement of the block 201 of the Fig. 2.

At first, the initial setting starts from a physical channel that is very frequently as shown in block 201 of the Fig. 2. the details of search movement of block 201 is shown in Fig. 3.

In the Fig. 3, by block 301, it sets the probability of highly receivable physical channel frequency that is the most frequently used. If the physical channel distribution is as shown in table 1, and table,2, it sets the high physical channel 31 that is very frequently used as a receiving physical channel.

As shown in the following block 302, it tries to receive the physical channel that has been set, and verifies the receiving state by block 304. After the receiving state at this time, manage an error correction provided by the transmission system, and may judge if the error of the transmission occurs finally. For example, if it is DVB-T, two phases error correction handling of Viterbi decode and Reed Solomon decode are done with by the decoder side, but it may confirm if an error rate is zero after the final Reed Solomon error correction is managed. Or, instead of the final error rate, it may judge using, for example, an error rate in Viterbi decode that is an error rate on transmission supposed that the final error will become zero. The judgement of the receiving state may use a clock reproduction using the modulation means 102, lock detect signal of a frequency position reproduction and presence of a standard signal and a pitch of signal level of a sub-carrier.

Next, in the case that the receiving state is judged to be enough by block 304, it ends this process as an end result 1. This result becomes an alternative of "finding a receiving physical channel" of the block 201 of Fig. 2. Conversely, in case that the receiving state is judged not to be enough, it verifies in block 305 if the search of higher ranking frequently used frequencies ends at this point. In this example, since only the search of the physical channel ends, it sets in block 303 a physical channel frequency of physical channel 58 that is the next most frequently used, it holds the receiving again, and it verifies the receiving state.

In this way, it continues the search until a receivable physical channel, the physical channel 60 that is fifth frequently used, can be found. In the case that it does not find any receivable physical channel when it searches until the physical channel 60, the search ends as end result 2. This becomes an alternative of "No receivable physical channel" of the block 201 of Fig. 2.

It returns to Fig. 2 here, and explains a management following the block 201. In case that a receivable physical channel is found by the block 201, then in the block 203, it extracts NIT information from transport stream of the receivable physical channel.

In case that a receivable physical channel does not find by the block 201, in the block 202, the search performs order searching from a frequency bottom end or frequency upper end of the physical channels in order. The detail movement of the block 202 is represented Fig. 3 as well as the block 201. For example, in case that the search performs from the frequency bottom end in order, in the block 301, at first it sets physical channel 21, and receives by the block 302. By the following block 304, it judges the receiving state, confirms whether the search of all physical channel come to an end by the block 305 if the receiving state is not enough, if the search has not come to an end, it sets physical channel 22 that is a next physical channel by the block 303, and receives as well.

In this way, it searches if there is a receivable physical channel until the upper end of physical channel 69 while it changes the physical channel one by one in order. In the setting this physical channel, five physical channels that are represented in the table 2, consequently, the physical channels 31, 58, 49, 25, 60 have already searched by the block 201 of Fig. 2, it skips and sets the physical channel because it is not necessary to tune.

In case that the enough physical channel of the receiving state is found, it finishes the order search as the end result 1. This becomes an alternative of "finding of a receivable physical channel" of the block 202 of Fig. 2 and shifts a movement of extracting NIT of the block 203.

In case that all-receivable physical channels search finish by the block 305 of Fig. 3, it finishes the order search as an end result 2. This becomes an alternative of "No receivable physical channel" of the block 202 of Fig. 2, and finishes initial setting process either. In this case, because a receivable physical channel has not been found, an effective information does not store in a searching information store means 110 on Fig. 1.

Movement after having extracted NIT information from the receivable physical channel by the block 203 of Fig. 2 successively is now explained. As described above, since a frequency information of other physical channels that are transmitted from the same SIP is included in the NIT information, in accordance with the frequency information of these acquired physical channels, it searches all physical channels that are transmitted from the transmitter by the block 204.

Further, then, as.mentioned above, if the modulation parameter is included in other physical channel, without using an excessive modulation parameter, it can tune using one combination of the parameter.

In case that the SIP consists of several transmitters, all physical channel information that several transmitters transmit, are contained in the NIT information. Because a data describing a transmitter that transmits at this time isn't contained to receiving signal, it judges the transmitting transmitter from physical channel distribution information. For example, transmitters 1, 2, and 3 constitute SIP 1 in table 1, and it is assumed that it was able to receive a digital modulation signal as a result of having searched for physical channel 31 by the block 201 of Fig. 2. The Physical channel information of the transmitters 1, 2 and 3 are provided when NIT information is extracted from the receiving signal. It is described in the NIT information that the SIP of receiving signal is the SIP 1 and the receiving transport stream is TS 5. Accordingly, if a transmitter that transmits a receiving transport stream using the receiving physical channel is judged, that is judged as the transmitter that transmits the receiving signal. In this example, it can judge that a transmitter that transmits TS 5 by physical channel 31 in transmitters 1, 2, and 3 is the transmitter 1.

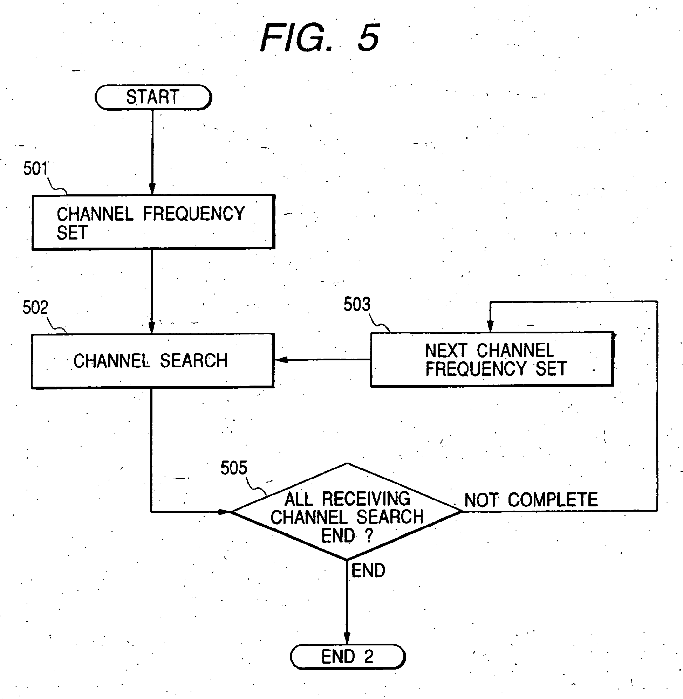

As described above, assuming that the physical channel 31 is receivable, the transmitter that transmits the physical channel is the transmitter 1 shown in the table 1, the received transport stream is TS 5, and other physical channel information of remaining TS1, 2, 3, 4,and 6 are contained in extracted NIT information. Accordingly, which TS uses each physical channel 22, 24, 28, 29 and 34, for transmission becomes clear. It searches for the physical channel 22, 24, 28, 29 and 34 in the block 204 from this information. Because it is considered that different transmission signals from the same transmitter usually have almost the same receiving state, searched physical channels 22, 24, 28, 29 and 34 have a high probability of being receivable. Further, search movement of the block 204 is shown by Fig. 5. The blocks 501, 502, 503, and 505 perform same movement as well as the blocks 301, 302, 303, and 305.

After searching ends on the basis of the NIT information, it verifies if all transport streams are receivable and receiving state is enough. In the above-mentioned example, if physical channels 31, 22, 24, 28, 29 and 34 are receivable, it can confirm that transport stream 1, 2, 3, 4, 5, and 6 are receivable. Further, since the number of searched physical channels is only six channels in the above example, it is very effective and can discover all transport streams.

If all transport streams are receivable, it lets a user select whether it searches all remaining physical channels that have not been searched in the block 206. If the user selects not to perform this search for remaining physical channels, it finishes the initial setting as all transport streams are receivable.

In case that all service do not receive in the block 205 or the user selects to perform the search for remaining physical channels, the search for all remaining physical channels is performed in block 207. In case that a receiving area where is a boundary area that can receive a signal from a plurality of transmitters, it gets possible to receive a signal from a transmitter that is better than others for all physical channel search. In this case, since there is a case that a transport stream having same content has a different physical channel that is receivable, in accordance with output of the receiving state judgement means 103, it may memorize the physical channel that is better receiving condition and takes precedence so as to watch in the searching information store means 110. Or displaying receiving state of each physical channel through display means 111, and let the user to select the physical channel for watching with taking priority.

In physical channel search as mentioned above, found receivable physical channel displays the physical channel information through display means 111 of Fig. 1 for the user, the physical channel that is necessary for receiving in the search information store means 110. As shown in the table 1, if there is the physical channel distribution and uses the search method according to this invention, in case that the most effective search is performed, accordingly, the physical channel that is the most frequently used is receivable, and in case that it searches the remaining five physical channel from the NIT information and they are receivable, the initial setting is performed as all transport streams are receivable during the search of the total of six physical channels. Therefore, an usual physical channel search in order requires total forty-nine physical channels, on the other hand, the required searching time for initial setting can shorten drastically. Further if the search become the worst effective search is performed, so as to skip the physical channel that has already searched, it is not necessary to perform the total forty-nine physical channel search, it can reduce a time to tune in any condition than simple search in order.

In an environment in which a real broadcast is done, since an area that can receive a transmission signal from each transmitter, and a number of households are different, in different areas, it is possible to tune the physical channel with priority to the area in which the power of the transmission is big or to an area which has a large population. In this case, it is good to change the searching priority order shown by the table 2 in proportion to usage transmitter number and number of receiving households. In other words, it may uses the receivable number of households and receivable area instead of transmitter number on the table 2.

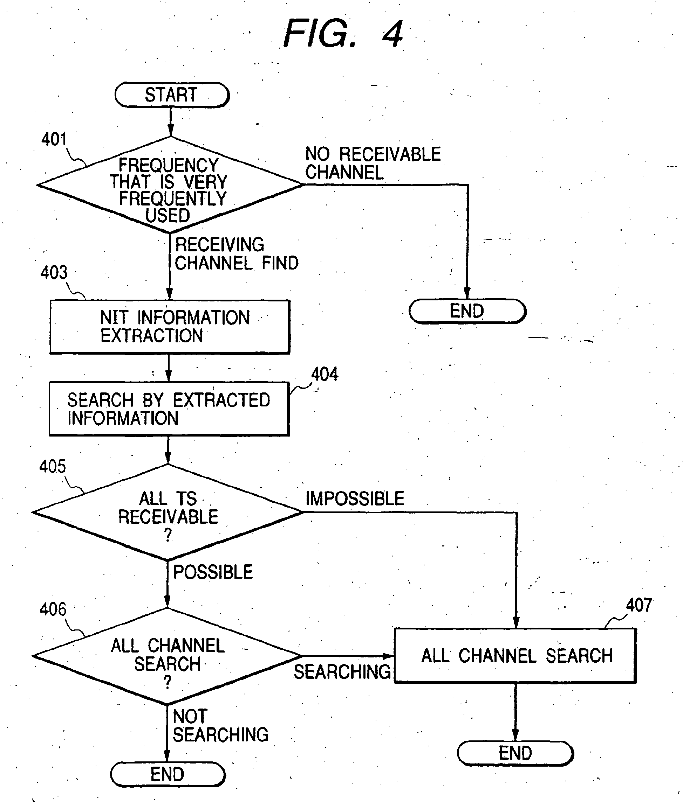

Fig. 4 is a flowchart representing the search movement on an initial setting of receiving information of receiving apparatus according to this invention. In the movement that explained by Fig. 2, when it wasn't able to discover a physical channel which is receivable in a search of physical channel of the five high ranked frequencies then it came to an end by the block 201 of Fig. 2 and started an order search. By the movement shown by Fig. 4 for this, it carries all physical channel that is frequently used in order in the block 401. The following table 3 rearranges the physical channel distribution of the table 1 in usage frequently order.

**Table 3**

| Order of frequently used | Physical channel | Number of using transmitters | | Order of frequently uses | Physical channel | Number of using transmitters |
|---|---|---|---|---|---|---|
| 1 | 31 | 12 | | 7 | 54 | 4 |
| 2 | 58 | 9 | | | 62 | 4 |
| 3 | 49 | 5 | | 8 | 44 | 3 |
| 4 | 25 | 7 | | | 48 | 3 |
| 5 | 60 | 6 | | | 50 | 3 |
| 6 | 29 | 5 | | | 53 | 3 |
| | 34 | 5 | | | 57 | 3 |
| | 39 | 5 | | | 63 | 3 |
| | 43 | 5 | | | 64 | 3 |
| | 46 | 5 | | | 65 | 3 |
| | 47 | 5 | | | 67 | 3 |
| | 55 | 5 | | 9 | 24 | 2 |
| | 56 | 5 | | | 40 | 2 |
| | 61 | 5 | | | 41 | 2 |
| | 68 | 5 | | | 66 | 2 |
| 7 | 21 | 4 | | | 69 | 2 |
| | 22 | 4 | | 100 | 33 | 1 |
| | 27 | 4 | | | 23 | 1 |
| | 28 | 4 | | 11 | 26 | 0 |
| | 32 | 4 | | | 30 | 0 |
| | 42 | 4 | | | 35 | 0 |
| | 45 | 4 | | | 36 | 0 |
| | 51 | 4 | | | 37 | 0 |
| | 52 | 4 | | | | |

A movement represented by Fig. 4 performs physical channel search in this order. Accordingly, the search from first to fifth physical channel that are very frequently used is as the same as the search of Fig. 2, and in case that receivable physical channel that is very frequently used is not discovered, it then searches the sixth most frequently used physical channels 29, 34, 39, 43, 46, 47, 55, 56, 61, and 68. As well as the above, it searches up to the eleventh most frequently used physical channels until discovering a receivable physical channel. In the block 401, in the case that a receivable physical channel is not found after searching all physical channels, it finishes the initial setting. In the case that a receivable channel is found, it extracts the NIT information by the block 403, as in Fig. 2, and it performs the search movement in accordance with extracted other physical channel information. In this way, it can perform the effective search of the physical channel and it is possible to reduce the time of searching for finding all transport streams.

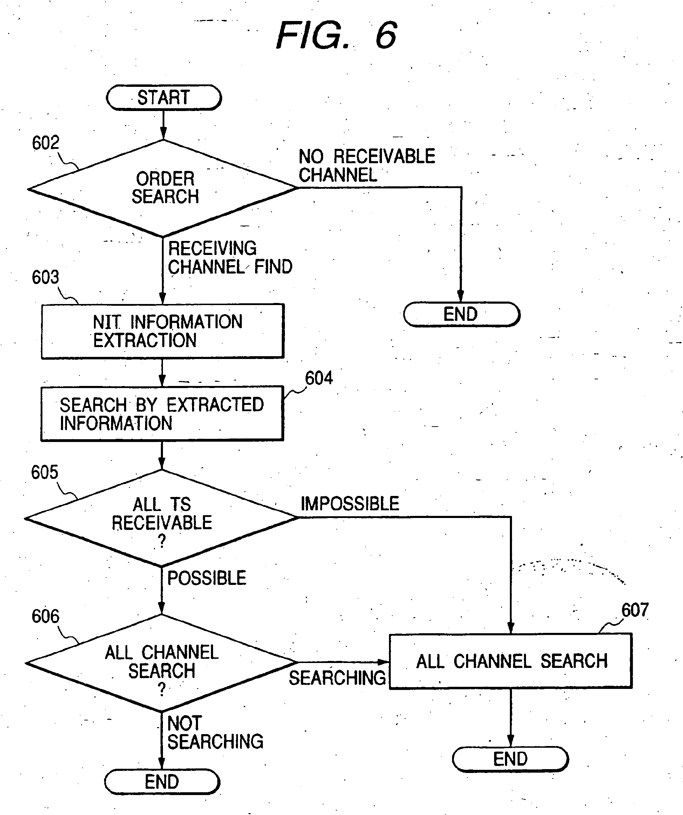

If when the receiving apparatus is manufactured it is not known what physical channel the transmitter will use and if the very frequently used physical channel does not usually change, then the apparatus can start with an order search rather than a search for the frequency which is very frequently used as described in previous embodiments. Accordingly, it changes the search of a frequency that is very frequently used into the order search, searches from physical channel frequency bottom end or top end in order, when a receivable physical channel is found at that time, it performs searching based upon extracting information using extracted NIT information from the receivable physical channel. Fig. 6 shows a flowchart of this case. In this way, since it is not necessary to tune all physical channels, it can reduce the time of the search.

The above explains a movement in case of OFDM modulation, but this invention is not limited to the OFDM modulation system, it is applicable to digital broadcast system using modulation, such as QPSK, QAM and VSB that also contain other physical channel information in the NIT information.

As described above, according to this invention, since it searches with priority a physical channel that is very frequently used using the physical channel distribution information, it only searches the minimum required number of physical channels. Further, using a channel frequency that contains extracted other physical channel information from a transport streams transmitted by receivable physical channel and modulation parameter, it can tune only a physical channel that expected to be receivable without using extra modulation parameter. Accordingly it can discover the receivable phys ical channel effectively within a short period of time, it reduces the time of searching and storing of the receivable physical channel.

## Claims

1. Receiving apparatus for selecting a physical channel of a digital modulation signal from a transmission signal which is constituted from a plurality of physical channels, the apparatus comprising:
selection means (101) arranged to receive the transmission signal, select a physical channel, and output a digital modulation signal of the selected physical channel;
demodulation means (102) arranged to demodulate the digital modulation signal outputted from the selection means (101) and output a transport stream;
physical channel distribution information store means (109) storing physical channel distribution information representing a distribution of the plurality of physical channels of the transmission signal;
receiving state judgement means (103) arranged to judge a receiving state of the digital modulation signal of the selected physical channel;
multiplex separation means (104) for separating a data signal from the transport stream outputted by the demodulation means (102);
data extraction means (107) arranged to extract physical channel information from the separated data signal;
search control means (108) arranged to control the selection means (101) based on the physical channel distribution information from the physical channel distribution information store means (109), a judged result from the receiving state judgement means(103), and the physical channel information from the data extraction means (107), and to obtain information on a receivable physical channel; and
search information storing means (110) for storing the obtained information on a receivable physical channel;
wherein
the physical channel distribution information includes first physical channel information representing a probability that a physical channel is used in a transmission signal;
the search control means (108) is arranged to control the selection means (101) to search physical channels in order of probability of usage according to the first physical channel information;
finish the search if a first physical channel is judged to be receivable by the receiving state judgement means (103); and
control the selection means (101) to select physical channels of other digital demodulation signals according to physical channel information extracted from the first physical channel by the data extraction means (107).

2. Receiving apparatus according to claim 1, wherein the search control means (108) is arranged:
to start the physical channel search with a physical channel that is most frequently used according to the first physical channel information;
to perform a second search for all physical channels of digital demodulation signals except the first physical channel which are identified in the physical channel information extracted from the first physical channel; and
upon finding a receivable physical channel of another digital demodulation signal using the physical channel information extracted from the first physical channel, to store physical channel information of each receivable digital demodulation signal in the search information storing means (110).

3. Receiving apparatus according to claim 2, wherein the physical channel distribution information stored in the physical channel distribution information store means (109) comprises information about a selected number (N) of physical channels in order of highest use frequency, the number (N) of physical channels being selected such that the total coverage of the number (N) of physical channels provides a physical channel for all receivable digital demodulation signals.

4. Receiving apparatus according to any one of claims 1to 3, wherein:
the physical channel distribution information store means (109) comprises an interchangeable information recording medium and readout means for reading out the information recording medium, whereby the physical channel distribution information is renewable; and
the search control means (108) is arranged to search for receivable physical channels using the physical channel distribution information after renewal thereof.

5. Receiving apparatus according to any one of claims 1 to 4, wherein the physical channel distribution information is renewable using the physical channel information extracted from the data signal by the data extraction means (107) including said data stream.

6. Receiving apparatus according to any one of claims 1 to 5 further comprising video display means (111) arranged to display externally a search state of the search control means (108).

7. Receiving apparatus according to claim 2, wherein the physical channel information extracted by the data extraction means (107) includes information about channel frequency, and: the second search searches according to the information about channel frequency.

8. Receiving apparatus according to claim 2, wherein the physical channel information extracted by the data extraction means (107) includes information on modulation parameter, and the second search searches according to the information on modulation parameter.

9. A method for selecting a physical channel of a digital modulation signal from a transmission signal using a receiving apparatus according to any preceding claim, the method comprising:
performing a first search for a selected physical channel of the digital modulation signal, the first search including controlling the selection means (101) to select physical channels in order of probability of usage according to the first physical channel information and ascertaining whether or not the selected physical channel is receivable or not according to a judgment result of the receiving state judgement means (103);
finishing the first search when a first receivable physical channel is found;
extracting physical channel information about other receivable physical channels from the first physical channel;
performing a second search for all physical channels of other digital demodulation signals except the first physical channel which are identified in the physical channel information extracted from the first physical channel; and
upon finding a receivable physical channel of another digital demodulation signal using the physical channel information extracted from the first physical channel, storing physical channel information of each receivable digital demodulation signal in the search information storing means (110).

10. A method according to claim 9, wherein the first search starts with a physical channel that is most frequently used according to the first physical channel information.

11. A method according to claim 9, wherein the physical channel distribution information comprises first physical channel information and second physical channel information, the first and second physical channel information in combination representing all physical channels of the digital modulation signal that are usable for transmission; and wherein the first search includes controlling the selection means (101) to select physical channels in order based on the first physical channel information followed by the second physical channel information.

## Patentansprüche

1. Empfangsvorrichtung zum Auswählen eines physikalischen Kanals eines digitalen Modulationssignals aus einem Übertragungssignal, das aus mehreren physikalischen Kanälen zusammengesetzt ist, wobei die Vorrichtung umfasst:
eine Auswahleinrichtung (101), die dazu ausgelegt ist, das Übertragungssignal zu empfangen, einen physikalischen Kanal auszuwählen und ein digitales Modulationssignal des ausgewählten physikalischen Kanals auszugeben;
eine Demodulationseinrichtung (102), die dazu ausgelegt ist, das aus der Auswahleinrichtung (101) ausgegebene digitale Modulationssignal zu demodulieren und einen Übertragungsstream auszugeben;
eine Speichereinrichtung (109) für Verteilungsinformationen physikalischer Kanäle, die Verteilungsinformationen physikalischer Kanäle, die eine Verteilung der mehreren physikalischen Kanäle des Übertragungssignals darstellen, speichert;
eine Empfangsstatus-Feststellungseinrichtung (103), die dazu ausgelegt ist, einen Empfangsstatus des digitalen Modulationssignals des ausgewählten physikalischen Kanals festzustellen;
Multiplex-Separationseinrichtung (104) zum Separieren eines Datensignals aus dem von der Demodulationseinrichtung (102) ausgegebenen Übertragungsstream;
eine Datenextraktionseinrichtung (107), die dazu ausgelegt ist, Informationen physikalischer Kanäle aus dem separierten Datensignal zu extrahieren;
eine Suchsteuereinrichtung (108), die dazu ausgelegt ist, die Auswahleinrichtung (101) auf der Grundlage der verteilungsinformationen physikalischer Kanäle aus der Speichereinrichtung (109) für Verteilungsinformationen, einem festgestellten Ergebnis aus der Empfangszustand-Feststellungseinrichtung (103) und den Informationen physikalischer Kanäle aus der Datenextraktionseinrichtung (107) zu steuern und Informationen über einen empfangbaren physikalischen Kanal zu erhalten; und
eine Speichereinrichtung (110) für Suchinformationen zum Speichern der erhaltenen Informationen über einen empfangbaren physikalischen Kanal;
wobei
die Verteilungsinformationen physikalischer Kanäle erste Informationen physikalischer Kanäle enthalten, die eine Wahrscheinlichkeit darstellen, dass ein physikalischer Kanal in einem Übertragungssignal verwendet wird;
die Suchsteuereinrichtung (108) dazu ausgelegt ist,
die Auswahleinrichtung (101) dahingehend zu steuern, dass sie physikalische Kanäle in der Reihenfolge der Verwendungswahrscheinlichkeit gemäß den ersten Informationen physikalischer Kanäle absucht;
die Suche zu beenden, falls von der Empfangszustand-Feststellungseinrichtung (103) ein erster physikalischer Kanal als empfangbar festgestellt wird; und
die Auswahleinrichtung (101) dahingehend zu steuern, dass sie physikalische Kanäle anderer digitaler Demodulationssignale gemäß Informationen physikalischer Kanäle auswählt, die von der Datenextraktionseinrichtung (107) aus dem ersten physikalischen Kanal extrahiert worden sind.

2. Empfangsvorrichtung nach Anspruch 1, wobei die Suchsteuereinrichtung (108) dazu ausgelegt ist:
die physikalische Kanalsuche mit einem physikalischen Kanal zu beginnen, der gemäß den ersten Informationen physikalischer Kanäle am häufigsten verwendet wird;
eine zweite Suche für alle physikalischen Kanäle digitale Demodulationssignale außer dem ersten physikalischen Kanal auszuführen, die in den aus dem ersten physikalischen Kanal extrahierten Informationen physikalischer Kanäle identifiziert sind; und
wenn ein empfangbarer physikalischer Kanal eines anderen digitalen Demodulationssignals unter Verwendung der aus dem ersten physikalischen Kanal extrahierten Informationen physikalischer Kanäle gefunden wird, Informationen physikalischer Kanäle jedes empfangbaren digitalen Demodulationssignals in der Speichereinrichtung (110) für Suchinformationen zu speichern.

3. Empfangsvorrichtung nach Anspruch 2, wobei die in der Speichereinrichtung (109) für Verteilungsinformationen physikalischer Kanäle gespeicherten Verteilungsinformationen physikalischer Kanäle Informationen über eine ausgewählte Zahl (N) physikalischer Kanäle in der Reihenfolge der höchsten Verwendungshäufigkeit umfassen, wobei die Zahl (N) physikalischer Kanäle so ausgewählt wird, dass der Gesamtumfang der Zahl (N) physikalischer Kanäle einen physikalischen Kanal für alle empfangbaren digitalen Demodulationssignale bereitstellt.

4. Empfangsvorrichtung nach einem der Ansprüche 1 bis 3, wobei:
die Speichereinrichtung (109) für Verteilungsinformationen physikalischer Kanäle ein auswechselbares Informationsaufzeichnungsmedium und eine Ausleseeinrichtung zum Auslesen des Informationsaufzeichnungsmediums umfasst, wodurch die Verteilungsinformationen physikalischer Kanäle erneuerbar sind; und
die Suchsteuereinrichtung (108) dazu ausgelegt ist, unter Verwendung der Verteilungsinformationen physikalischer Kanäle nach deren Erneuerung nach empfangbaren physikalischen Kanälen zu suchen.

5. Empfangsvorrichtung nach einem der Ansprüche 1 bis 4, wobei die Verteilungsinformationen physikalischer Kanäle unter Verwendung der von der Datenextraktionseinrichtung (107) aus dem Datensignal extrahierten Informationen physikalischer Kanäle einschließlich des Datenstreams erneuerbar sind.

6. Empfangsvorrichtung nach einem der Ansprüche 1 bis 5, ferner umfassend eine Videoanzeigeeinrichtung (111), die dazu ausgelegt ist, einen Suchstatus der Suchsteuereinrichtung (108) extern anzuzeigen.

7. Empfangsvorrichtung nach Anspruch 2, wobei die von der Datenextraktionseinrichtung (107) extrahierten Informationen physikalischer Kanäle Informationen über die Kanalhäufigkeit enthalten und die zweite Suche gemäß den Informationen über die Kanalhäufigkeit sucht.

8. Empfangsvorrichtung nach Anspruch 2, wobei die von der Datenextraktionseinrichtung (107) extrahierten Informationen physikalischer Kanäle Informationen über Modulationsparameter enthalten und die zweite Suche gemäß den Informationen über Modulationsparameter sucht.

9. Verfahren zum Auswählen eines physikalischen Kanals eines digitalen Modulationssignals aus einem Übertragungssignal unter Verwendung einer Empfangsvorrichtung nach einem der vorhergehenden Ansprüche, wobei das Verfahren umfasst:
Durchführen einer ersten Suche nach einem ausgewählten physikalischen Kanal des digitalen Modulationssignals, wobei die erste Suche das Steuern der Auswahleinrichtung (101) dahingehend, dass sie physikalische Kanäle in der Reihenfolge der Verwendungswahrscheinlichkeit gemäß den ersten Informationen physikalischer Kanäle auswählt, sowie das Sicherstellen, ob der ausgewählte physikalische Kanal gemäß einem Feststellungsergebnis der Empfangszustand-Feststellungseinrichtung (103) empfangbar ist oder nicht, umfasst;
Beenden der ersten Suche, wenn ein erster empfangbarer physikalischer Kanal gefunden wird;
Extrahieren von Informationen physikalischer Kanäle über andere empfangbare physikalische Kanäle aus dem ersten physikalischen Kanal;
Durchführen einer zweiten Suche nach allen physikalischen Kanälen anderer digitaler Demodulationssignale außer dem ersten physikalischen Kanal, die in den aus dem ersten physikalischen Kanal extrahierten Informationen physikalischer Kanäle identifiziert sind; und
wenn ein empfangbarer physikalischer Kanal eines anderen digitalen Demodulationssignals unter Verwendung der aus dem ersten physikalischen Kanal extrahierten Informationen physikalischer Kanäle gefunden wird, Speichern von Informationen physikalischer Kanäle jedes empfangbaren digitalen Demodulationssignals in der Speichereinrichtung (110) für Suchinformationen.

10. Verfahren nach Anspruch 9, wobei die erste Suche mit einem physikalischen Kanal beginnt, der gemäß den ersten Informationen physikalischer Kanäle am häufigsten verwendet wird.

11. Verfahren nach Anspruch 9, wobei die Verteilungsinformationen physikalischer Kanäle erste Informationen physikalischer Kanäle und zweite Informationen physikalischer Kanäle umfassen, wobei die ersten und die zweiten Informationen physikalischer Kanäle in Kombination alle physikalischen Kanäle des digitalen Modulationssignals darstellen, die zur Übertragung verwendbar sind, und wobei die erste Suche das Steuern der Auswahleinrichtung (101) dahingehend umfasst, dass sie physikalische Kanäle in der Reihenfolge auf der Grundlage der ersten Informationen physikalischer Kanäle gefolgt von den zweiten Informationen physikalischer Kanäle auswählt.

## Revendications

1. Dispositif de réception pour sélectionner un canal physique d'un signal de modulation numérique depuis un signal de transmission qui est constitué d'une pluralité de canaux physiques, le dispositif comportant :
des moyens de sélection (101) conçus pour recevoir le signal de transmission, sélectionner un canal physique et délivrer en sortie un signal de modulation numérique du canal physique sélectionné,
des moyens de démodulation (102) conçus pour démoduler le signal de modulation numérique délivré en sortie par les moyens de sélection (101) et délivrer en sortie un flux de transport,
des moyens de mémorisation d'informations de répartition de canaux physiques (109) mémorisant des informations de répartition de canaux physiques représentant une répartition de la pluralité de canaux physiques du signal de transmission,
des moyens de détermination d'état de réception (103) conçus pour déterminer un état de réception du signal de modulation numérique du canal physique sélectionné,
des moyens de séparation multiplex (104) pour séparer un signal de données du flux de transport délivré en sortie par les moyens de démodulation (102),
des moyens d'extraction de données (107) conçus pour extraire des informations de canal physique du signal de données séparé,
des moyens de commande de recherche (108) conçus pour commander les moyens de sélection (101) sur la base des informations de répartition de canaux physiques provenant des moyens de mémorisation d'informations de répartition de canaux physiques (109), d'un résultat déterminé provenant des moyens de détermination d'état de réception (103), et des informations de canal physique provenant des moyens d'extraction de données (107), et pour obtenir des informations sur un canal physique recevable, et
des moyens de mémorisation d'informations de recherche (110) pour mémoriser les informations obtenues sur un canal physique recevable,
dans lequel
les informations de répartition de canaux physiques incluent des informations de premier canal physique représentant une probabilité qu'un canal physique soit utilisé dans un signal de transmission,
les moyens de commande de recherche (108) sont conçus pour
commander les moyens de sélection (101) afin de rechercher des canaux physiques dans l'ordre de probabilité d'utilisation conformément aux informations de premier canal physique,
terminer la recherche si un premier canal physique est déterminé comme étant recevable par les moyens de détermination d'état de réception (103), et
commander les moyens de sélection (101) pour sélectionner des canaux physiques d'autres signaux de démodulation numériques conformément à des informations de canal physique extraites du premier canal physique par les moyens d'extraction de données (107).

2. Dispositif de réception selon la revendication 1, dans lequel les moyens de commande de recherche (108) sont conçus :
pour lancer la recherche de canal physique par un canal physique qui est le plus fréquemment utilisé conformément aux informations du premier canal physique,
pour exécuter une seconde recherche pour tous les canaux physiques de signaux de démodulation numériques à l'exception du premier canal physique qui sont identifiés dans les informations de canal physique extraites du premier canal physique, et
lors de la découverte d'un canal physique recevable d'un autre signal de démodulation numérique en utilisant les informations de canal physique extraites du premier canal physique, pour mémoriser des informations de canal physique de chaque signal de démodulation numérique recevable dans les moyens de mémorisation d'informations de recherche (110).

3. Dispositif de réception selon la revendication 2, dans lequel les informations de répartition de canaux physiques mémorisées dans les moyens de mémorisation d'informations de répartition de canaux physiques (109) comportent des informations concernant un nombre (N) sélectionné de canaux physiques dans l'ordre de fréquence d'utilisation la plus élevée, le nombre (N) de canaux physiques étant sélectionné de sorte que la couverture totale du nombre (N) de canaux physiques fournit un canal physique pour tous les signaux de démodulation numériques recevables.

4. Dispositif de réception selon l'une quelconque des revendications 1 à 3, dans lequel :
les moyens de mémorisation d'informations de répartition de canaux physiques (109) comportent un support d'enregistrement d'informations interchangeable et des moyens d'extraction pour extraire le support d'enregistrement d'informations, les informations de répartition de canaux physiques étant renouvelables, et
les moyens de commande de recherche (108) sont conçus pour rechercher des canaux physiques recevables en utilisant les informations de répartition de canaux physiques après le renouvellement de celles-ci.

5. Dispositif de réception selon l'une quelconque des revendications 1 à 4, dans lequel les informations de répartition de canaux physiques sont renouvelables en utilisant les informations de canal physique extraites du signal de données par les moyens d'extraction de données (107) incluant ledit flux de données.

6. Dispositif de réception selon l'une quelconque des revendications 1 à 5 comportant en outre des moyens d'affichage vidéo (111) conçus pour afficher en externe un état de recherche des moyens de commande de recherche (108).

7. Dispositif de réception selon la revendication 2, dans lequel les informations de canal physique extraites par les moyens d'extraction de données (107) incluent des informations concernant une fréquence de canal, et la seconde recherche effectue une recherche conformément aux informations concernant la fréquence de canal.

8. Dispositif de réception selon la revendication 2, dans lequel les informations de canal physique extraites par les moyens d'extraction de données (107) incluent des informations sur un paramètre de modulation, et la seconde recherche effectue une recherche conformément aux informations sur le paramètre de modulation.

9. Procédé pour sélectionner un canal physique d'un signal de modulation numérique depuis un signal de transmission en utilisant un dispositif de réception conformément à l'une quelconque des revendications précédentes, le procédé comportant les étapes consistant à :
exécuter une première recherche pour un canal physique sélectionné du signal de modulation numérique, la première recherche incluant de commander les moyens de sélection (101) pour sélectionner des canaux physiques dans l'ordre de probabilité d'utilisation conformément aux informations du premier canal physique et de vérifier si oui ou non le canal physique sélectionné est recevable conformément à un résultat de détermination des moyens de détermination d'état de réception (103),
terminer la première recherche lorsqu'un premier canal physique recevable est trouvé,
extraire des informations de canal physique concernant d'autres canaux physiques recevables du premier canal physique,
exécuter une seconde recherche pour tous les canaux physiques d'autres signaux de démodulation numériques à l'exception du premier canal physique qui sont identifiés dans les informations de canal physique extraites du premier canal physique, et
lors de la découverte d'un canal physique recevable d'un autre signal de démodulation numérique en utilisant les informations de canal physique extraites du premier canal physique, mémoriser des informations de canal physique de chaque signal de démodulation numérique recevable dans les moyens de mémorisation d'informations de recherche (110).

10. Procédé selon la revendication 9, dans lequel la première recherche commence par un canal physique qui est le plus fréquemment utilisé conformément aux informations du premier canal physique.

11. Procécé selon la revendication 9, dans lequel les informations de répartition de canaux physiques comportent des informations de premier canal physique et des informations de second canal physique, les informations de premier et second canal physique en combinaison représentant tous les canaux physiques du signal de modulation numérique qui sont utilisables en vue d'une transmission, et dans lequel la première recherche inclut de commander les moyens de sélection (101) pour sélectionner des canaux physiques dans l'ordre sur la base des informations de premier canal physique suivies par les informations de second canal physique.
